# EUROPÄISCHE PATENTANMELDUNG

(11) **EP 4 693 649 A1**
(43) Veröffentlichungstag der Anmeldung: **11.02.2026**
(21) Anmeldenummer: 25188167.8
(22) Anmeldetag: 08.07.2025
(51) Int. Cl.: H01M 50/209, H01M 50/503, H01M 50/505, H01M 50/517, H01M 50/553

(54) **BATTERIEZELLENANORDNUNG SOWIE VERFAHREN ZUR HERSTELLUNG DER BATTERIEZELLENANORDNUNG**

(30) Priorität: 06.08.2024 DE 102024207414
(71) Anmelder: VOLKSWAGEN AKTIENGESELLSCHAFT, 38440 Wolfsburg (DE)
(72) Erfinder: Crull, Sven, 38440 Wolfsburg (DE); Kühnlenz, Florian, 38440 Wolfsburg (DE); Fandrich, Tobias, 38440 Wolfsburg (DE); Hill, Christian, 38440 Wolfsburg (DE)

(57) **Zusammenfassung**

Die Erfindung betrifft eine Batteriezellenanordnung mit einer ersten Batteriezelle mit einem ersten Zellpol (7), einer zweiten Batteriezelle mit einem zweiten Zellpol (13) und einem Kontaktelement (21) zur elektrischen Kontaktierung der ersten Batteriezelle mit der zweiten Batteriezelle, wobei der erste Zellpol (7) über das Kontaktelement (21) mit dem zweiten Zellpol (13) elektrisch kontaktiert ist. Erfindungsgemäß ist vorgesehen, dass das Kontaktelement (21) zwischen den ersten Zellpol (7) und den zweiten Zellpol (13) geklemmt ist, wobei bevorzugt vorgesehen ist, dass die erste Batteriezelle und die zweite Batteriezelle derart zueinander angeordnet sind, dass der erste Zellpol (7) dem zweiten Zellpol (13) gegenüberliegt, und wobei besonders bevorzugt vorgesehen ist, dass der erste Zellpol (7) und der zweite Zellpol (13) um einen Zwischenspalt (31) voneinander beabstandet sind, und dass das Kontaktelement (21) in dem Zwischenspalt (31) angeordnet ist, und dass der Zwischenspalt (31) mit einer, bevorzugt elektrisch isolierenden, Vergussmasse (41) gefüllt ist.

## Beschreibung

Die Erfindung betrifft eine Batteriezellenanordnung nach dem Oberbegriff des Anspruches 1 sowie ein Verfahren zur Herstellung der Batteriezellenanordnung nach dem Oberbegriff des Anspruches 6 oder 7.

Aus der DE 10 2016 211 122 A1 ist eine gattungsgemäße Batteriezellenanordnung bekannt. Die Batteriezellenanordnung weist eine erste Batteriezelle mit einem ersten Zellpol und eine zweite Batteriezelle mit einem zweiten Zellpol auf. Die erste Batteriezelle ist neben der zweiten Batteriezelle angeordnet, und zwar derart, dass der erste Zellpol und der zweite Zellpol auf einer gemeinsamen Seite der nebeneinander angeordneten Batteriezellen liegen. Zusätzlich weist die Batteriezellenanordnung einen Zellverbinder auf, der zur elektrischen Kontaktierung der Batteriezellen sowohl mit dem ersten Zellpol als auch mit dem zweiten Zellpol verschweißt ist. Sollte sich bei einer Prüfung der Funktionsfähigkeit der Batteriezellenanordnung oder auch im sonstigen Betrieb der Batteriezellenanordnung herausstellen, dass die Batteriezellenanordnung und insbesondere der Zellverbinder nicht ordnungsgemäß funktionieren, so kann die Batteriezellenanordnung nur nach Zerstörung der Schweißverbindungen zwischen dem Zellverbinder und den Zellpolen instand gesetzt werden. Die Batteriezellenanordnung hat somit den Nachteil, dass die Instandsetzung der Batteriezellenanordnung nur mit hohem Aufwand möglich ist.

Aus der DE 10 2007 063 178 A1 ist eine Batterie mit einer Wärmeleitplatte zum Temperieren der Batterie bekannt.

Eine Aufgabe der Erfindung besteht darin, eine Batteriezellenanordnung bereitzustellen, die mit geringem Aufwand instandsetzbar ist.

Diese Aufgabe ist durch die Merkmale der unabhängigen Ansprüche gelöst. Bevorzugte Weiterbildungen der Erfindung sind in den Unteransprüchen offenbart.

Erfindungsgemäß vorgeschlagen ist eine Batteriezellenanordnung mit einer ersten Batteriezelle mit einem ersten Zellpol, einer zweiten Batteriezelle mit einem zweiten Zellpol und einem Kontaktelement zur elektrischen Kontaktierung der ersten Batteriezelle mit der zweiten Batteriezelle, wobei der erste Zellpol über das Kontaktelement mit dem zweiten Zellpol elektrisch kontaktiert ist. erfindungsgemäß ist vorgesehen, dass das Kontaktelement zwischen den ersten Zellpol und den zweiten Zellpol geklemmt ist, wobei bevorzugt vorgesehen ist, dass zwischen dem Kontaktelement und dem ersten Zellpol und/oder dem zweiten Zellpol keine unmittelbare Stoffschlussverbindung und/oder keine unmittelbare Formschlussverbindung steht, und/oder wobei bevorzugt vorgesehen ist, dass das Kontaktelement außer, bevorzugt außer unmittelbarer, Stoffschlussverbindung mit dem ersten Zellpol und/oder dem zweiten Zellpol steht und/oder außer, bevorzugt außer unmittelbarer, Formschlussverbindung mit dem ersten Zellpol und/oder dem zweiten Zellpol steht. Dadurch, dass das Kontaktelement zwischen den ersten Zellpol und den zweiten Zellpol, bevorzugt nur, geklemmt ist, ist es möglich, das Kontaktelement zerstörungsfrei von dem ersten Zellpol und dem zweiten Zellpol zu lösen. Die Batteriezelle ist dadurch mit geringerem Aufwand instandsetzbar als bekannte Batteriezellenanordnungen. Durch die elastische Verformung und/oder elastische Verformbarkeit des Kontaktelementes ermöglicht das Kontaktelement auch einen Lage- und/oder Positionstoleranzausgleich zwischen dem ersten Zellpol und dem zweiten Zellpol.

Um im Vergleich zu einer Batteriezellenanordnung, bei der die Zellpole der Batteriezellen auf einer gemeinsamen Seite der Batteriezellen liegen, eine niedriger bauende Batteriezellenanordnung zu erhalten, ist beispielhaft vorgesehen, dass die erste Batteriezelle und die zweite Batteriezelle derart zueinander angeordnet sind, dass der erste Zellpol dem zweiten Zellpol gegenüberliegt. Anders ausgedrückt oder alternativ oder zusätzlich kann vorgesehen sein, dass der erste Zellpol dem zweiten Zellpol zugewandt ist.

Um das Kontaktelement zwischen dem ersten Zellpol und dem zweiten Zellpol mechanisch zu fixieren und ferner das Kontaktelement und die Zellpole vor Korrosion zu schützen, ist bevorzugt vorgesehen, dass der erste Zellpol und der zweite Zellpol um einen Zwischenspalt voneinander beabstandet sind, und dass das Kontaktelement in dem Zwischenspalt angeordnet ist, und dass der Zwischenspalt mit einer, bevorzugt elektrisch isolierenden, Vergussmasse gefüllt ist. Bevorzugt ist vorgesehen, dass der Zwischenspalt derart mit der Vergussmasse gefüllt ist, dass das Kontaktelement, mit Ausnahme der Bereiche des Kontaktelementes, die in elektrischem Kontakt mit dem ersten Zellpol oder dem zweiten Zellpol stehen und/oder die gegen den ersten Zellpol oder den zweiten Zellpol geklemmt sind, vollständig von der Vergussmasse umgeben ist.

Um das Kontaktelement zwischen dem ersten Zellpol und dem zweiten Zellpol klemmen zu können, ist bei einer beispielhaften Ausführungsform vorgesehen, dass das Kontaktelement einen Basisabschnitt und einen ersten Kontaktabschnitt oder mehrere erste Kontaktabschnitte und/oder einen zweiten Kontaktabschnitt oder mehrere zweite Kontaktabschnitte aufweist, und dass zumindest einer der ersten Kontaktabschnitte oder einer der zweiten Kontaktabschnitte gegenüber dem Basisabschnitt unter Aufbau einer Vorspannkraft elastisch verformt ist. Konkret kann vorgesehen sein, dass der Basisabschnitt unter Einwirkung der Vorspannkraft mittelbar über zumindest einen der ersten Kontaktabschnitte, gegen den ersten Zellpol gedrückt ist, und/oder dass der Basisabschnitt unter Einwirkung der Vorspannkraft unmittelbar gegen den ersten Zellpol gedrückt ist und/oder dass zumindest einer der ersten Kontaktabschnitte, bevorzugt unmittelbar, gegen den zweiten Zellpol gedrückt ist.

Um das Kontaktelement mit guten Klemmeigenschaften bei geringem Aufwand kostengünstig herstellen zu können, ist exemplarisch vorgesehen, dass einer, mehrere oder alle ersten Kontaktabschnitte und/oder einer, mehrere oder alle zweiten Kontaktabschnitte mit dem Basisabschnitt jeweils einen in Richtung einer Kontaktelementspitze des Kontaktelementes spitzen und in Richtung eines hinteren Endes des Kontaktelementes offenen Winkel einschließen, wobei bevorzugt vorgesehen ist, dass der Winkelwert des Winkels in einem Bereich von 10° bis 80°, bevorzugt in einem Bereich von 30° bis 60°, besonders bevorzugt in einem Bereich von 40° bis 50°, liegt. Alternativ oder zusätzlich kann vorgesehen sein, dass der Basisabschnitt im Wesentlichen plattenförmig ist, und dass einer, mehrere oder alle der ersten Kontaktabschnitte und/oder dass einer, mehrere oder alle der zweiten Kontaktabschnitte die Form einer Lamelle aufweist.

Erfindungsgemäß vorgeschlagen ist ferner ein erstes Verfahren zur Herstellung einer, wie vorbeschriebenen, Batteriezellenanordnung mit einem Bereitstellungsschritt, bei dem die erste Batteriezelle mit dem ersten Zellpol und die zweite Batteriezelle mit dem zweiten Zellpol sowie dem Kontaktelement bereitgestellt werden. Erfindungsgemäß ist vorgesehen, dass das Verfahren einen Anordnungsschritt aufweist, bei dem die erste Batteriezelle und die zweite Batteriezelle derart in vordefinierter Lage und/oder vordefinierter Position zueinander angeordnet werden, dass der erste Zellpol dem zweiten Zellpol gegenüberliegt und sich zwischen dem ersten Zellpol und dem zweiten Zellpol ein Zwischenspalt erstreckt, und dass das Verfahren einen Kontaktierschritt aufweist, bei dem das Kontaktelement unter elastischer Verformung in den Zwischenspalt eingeschoben und/oder eingesetzt wird, so dass das Kontaktelement zwischen den ersten Zellpol und den zweiten Zellpol geklemmt ist. Dadurch, dass das Kontaktelement zwischen den ersten Zellpol und den zweiten Zellpol geklemmt ist, ist es möglich, das Kontaktelement zerstörungsfrei von dem ersten Zellpol und dem zweiten Zellpol zu lösen. Die Batteriezelle ist dadurch mit geringerem Aufwand instandsetzbar als bekannte Batteriezellenanordnungen. Bevorzugt kann vorgesehen sein, dass das Kontaktelement bei dem Kontaktierschritt unter elastischer Verformung von zumindest einem der ersten Kontaktabschnitte gegenüber dem Basisabschnitt und/oder von zumindest einem der zweiten Kontaktabschnitte gegenüber dem Basisabschnitt in den Zwischenspalt eingeschoben wird.

Erfindungsgemäß vorgeschlagen ist ferner ein zweites Verfahren zur Herstellung einer, wie vorbeschriebenen, Batteriezellenanordnung mit dem Bereitstellungsschritt, bei dem die erste Batteriezelle mit dem ersten Zellpol und die zweite Batteriezelle mit dem zweiten Zellpol sowie das Kontaktelement bereitgestellt werden. Erfindungsgemäß ist vorgesehen, dass das Verfahren einen Fixierschritt aufweist, bei dem die erste Batteriezelle in vordefinierter Lage und/oder vordefinierter Position fixiert wird, und dass das Verfahren einen Pressschritt aufweist, bei dem der zweite Zellpol unter Zwischenordnung des Kontaktelementes und elastischer Verformung des Kotaktelementes gegen den ersten Zellpol gepresst und zeitlich anschließend die zweite Batteriezelle relativ zu der ersten Batteriezelle fixiert wird, so dass das Kontaktelement zwischen den ersten Zellpol und den zweiten Zellpol geklemmt ist. Dadurch, dass das Kontaktelement zwischen den ersten Zellpol und den zweiten Zellpol geklemmt ist, ist es möglich, das Kontaktelement zerstörungsfrei von dem ersten Zellpol und dem zweiten Zellpol zu lösen. Die Batteriezelle ist dadurch mit geringerem Aufwand instandsetzbar als bekannte Batteriezellenanordnungen. Bevorzugt kann vorgesehen sein, dass das Kontaktelement bei dem Pressschritt unter elastischer Verformung von zumindest einem der ersten Kontaktabschnitte gegenüber dem Basisabschnitt und/oder von zumindest einem der zweiten Kontaktabschnitte gegenüber dem Basisabschnitt von dem zweiten Zellpol gegen den ersten Zellpol gepresst wird.

Um eine zuverlässige elektrische Kontaktierung der ersten Batteriezelle und der zweiten Batteriezelle auch bei aluminiumhaltigen Zellpolen zu erreichen, ist bevorzugt vorgesehen, dass das Kontaktelement dazu ausgebildet ist und/oder dazu geeignet ist und/oder dass sich durch die elastische Verformung des Kontaktelementes eine derart hohe Vorspannkraft in dem Kontaktelement aufbaut, dass das Kontaktelement beim Kontaktierschritt oder beim Pressschritt, bevorzugt bei Zellpolen, die Aluminium oder eine Aluminiumlegierung aufweisen, eine Oxidschicht, bevorzugt eine Alumiumoxidschicht, des ersten Zellpols und/oder des zweiten Zellpols abreibt oder abkratzt.

Um das Kontaktelement zwischen dem ersten Zellpol und dem zweiten Zellpol mechanisch zu fixieren und ferner das Kontaktelement und die Zellpole vor Korrosion zu schützen, ist bevorzugt vorgesehen, dass das Verfahren einen Vergussschritt aufweist, bei dem eine, bevorzugt elektrisch isolierende, Vergussmasse in den Zwischenspalt und/oder in einen Vergussraum zwischen der ersten Batteriezelle und der zweiten Batteriezelle gefüllt wird. Bevorzugt kann vorgesehen sein, dass die Vergussmasse derart in den Zwischenspalt gefüllt wird, dass das Kontaktelement, mit Ausnahme der Bereiche des Kontaktelementes, die in, bevorzugt unmittelbarem, Anlagekontakt mit dem ersten Zellpol oder dem zweiten Zellpol stehen, vollständig von der Vergussmasse umgeben ist. Alternativ oder zusätzlich kann vorgesehen sein, dass die Vergussmasse derart in den Vergussraum zwischen der ersten Batteriezelle und der zweiten Batteriezelle gefüllt wird, dass der Vergussraum zwischen der ersten Batteriezelle und der zweiten Batteriezelle, bevorzugt mit Ausnahme des Kontaktelementes, vollständig mit der Vergussmasse gefüllt wird.

Erfindungsgemäß vorgeschlagen ist ferner eine Batterie mit einer, wie vorbeschriebenen, Batteriezellenanordnung oder mit einer Batteriezellenanordnung, die nach dem ersten Verfahren oder dem zweiten Verfahren hergestellt ist.

Nachstehend sind weitere erläuternde und/oder ergänzende Aspekte der Erfindung genannt. Die Aspekte beziehen sich gleichermaßen auf die vorstehend beschriebene Batteriezellenanordnung als auch auf die vorbeschriebenen Verfahren zur Herstellung der Batteriezellenanordnung.

Um eine möglichst platzsparende Batteriezellenanordnung zu erhalten, kann vorgesehen sein, dass die erste Batteriezelle durch eine prismatische Batteriezelle gebildet ist, und/oder dass die zweite Batteriezelle durch eine prismatische Batteriezelle gebildet ist.

Beispielhaft ist vorgesehen, dass bei der Batteriezellenanordnung die erste Batteriezelle identisch zu der zweiten Batteriezelle aufgebaut ist, und dass bei der Batteriezellenanordnung die erste Batteriezelle zu einer Symmetrieebene ebenensymmetrisch zu der zweiten Batteriezelle ist.

Beispielhaft kann vorgesehen sein, dass das Kontaktelement zu einer Mittelebene ebensymmetrisch ist, wobei bevorzugt vorgesehen ist, dass sich der Basisabschnitt im Wesentlichen flächig in der Mittelebene erstreckt, und/oder wobei bevorzugt vorgesehen ist, dass bei der Batteriezellenanordnung die Mittelebene mit der Symmetrieebene zusammenfällt.

Beispielhaft kann vorgesehen sein, dass das Material des ersten Zellpols Aluminium oder eine Aluminiumlegierung aufweist, und/oder dass das Material des zweiten Zellpols Aluminium oder eine Aluminiumlegierung aufweist.

Dass das Kontaktelement zwischen den ersten Zellpol und den zweiten Zellpol geklemmt ist, kann beispielhaft wie folgt verstanden werden: Das Kontaktelement kann derart zwischen den ersten Zellpol und den zweiten Zellpol geklemmt sein, dass das Kontaktelement unter Aufbau einer Vorspannkraft elastisch verformt ist. Bevorzugt kann vorgesehen sein, dass das Kontaktelement unter Einwirkung der Vorspannkraft oder einem Teil der Vorspannkraft gegen den ersten Zellpol und/oder gegen den zweiten Zellpol drückt, so dass das Kontaktelement mit dem ersten Zellpol in Kraftschlussverbindung, bevorzugt Reibschlussverbindung, steht, und/oder so dass das Kontaktelement mit dem zweiten Zellpol in Kraftschlussverbindung, bevorzugt Reibschlussverbindung, steht.

Nachfolgend sind Ausführungsformen der Erfindung anhand der beigefügten Figuren beschrieben.

Es zeigen:
- Figur 1: in einer Ansicht von oben eine erste Batteriezelle und eine zweite Batteriezelle, bei der ein Vergussraum zwischen den Batteriezellen mit einer Vergussmasse gefüllt ist;
- Figur 2: in einer Ansicht von oben ein Kontaktelement zu elektrischen Kontaktierung der ersten Batteriezelle mit der zweiten Batteriezelle;
- Figur 3: in einer Ansicht von oben die erste Batteriezelle und die zweite Batteriezelle;
- Figur 4: in einer Ansicht von oben die erste Batteriezelle und die zweite Batteriezelle und das Kontaktelement, und
- Figur 5: in einer Ansicht von oben eine Batteriezellenanordnung, bei der das Kontaktelement zwischen der ersten Batteriezelle und der zweiten Batteriezelle geklemmt ist.

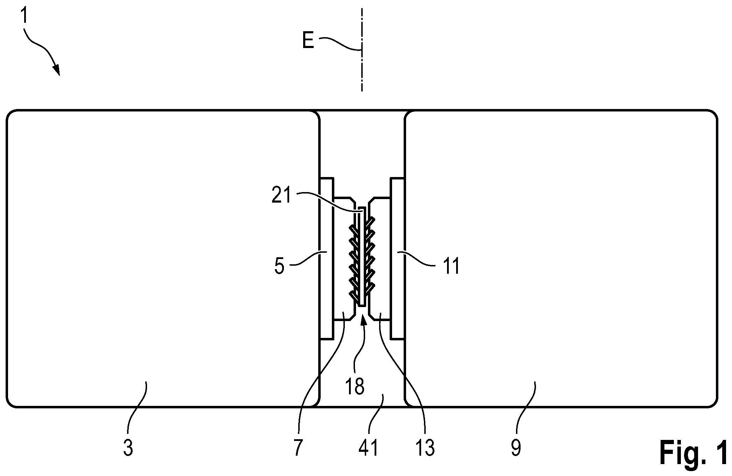

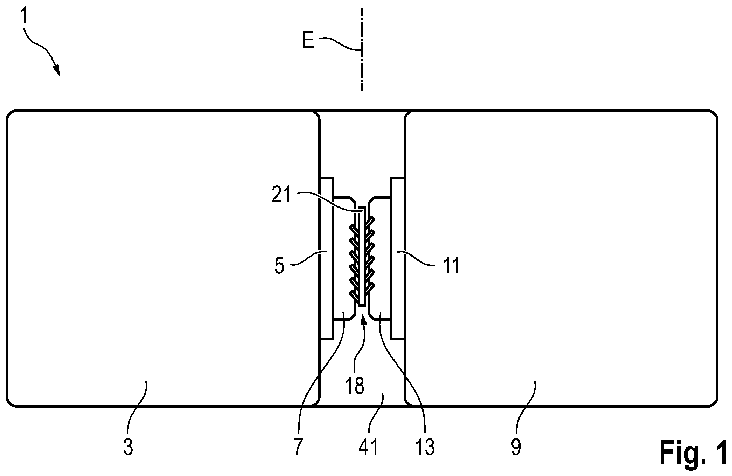

In der Figur 1 ist eine Batteriezellenanordnung 1 gezeigt. Die Batteriezellenanordnung 1 weist eine erste Batteriezelle mit einem ersten Zellgehäuse 3, einem ersten Isolationselement 5 und einem ersten Zellpol 7 sowie eine zweite Batteriezelle mit einem zweiten Zellgehäuse 9, einem zweiten Isolationselement 11 und einem zweiten Zellpol 13 auf. Mittels dem ersten Isolationselement 5 ist der erste Zellpol 7 elektrisch gegenüber dem ersten Zellgehäuse 3 isoliert. Mittels dem zweiten Isolationselement 11 ist der zweite Zellpol 13 elektrisch gegenüber dem zweiten Zellgehäuse 9 isoliert.

Die erste Batteriezelle und die zweite Batteriezelle sind jeweils und, hier lediglich als eines von mehreren Beispielen, prismatische Batteriezellen. Das Material des ersten Zellpols und des zweiten Zellpols weist eine Aluminiumlegierung auf. Selbstverständlich kann das Material auch andere Metalle und/oder Legierungen, wie beispielsweise auch eine Kupferlegierung aufweisen. Wie dies in der Figur 1 verdeutlicht ist, ist die erste Batteriezelle zu einer Symmetrieebene E ebenensymmetrisch zu der zweiten Batteriezelle angeordnet.

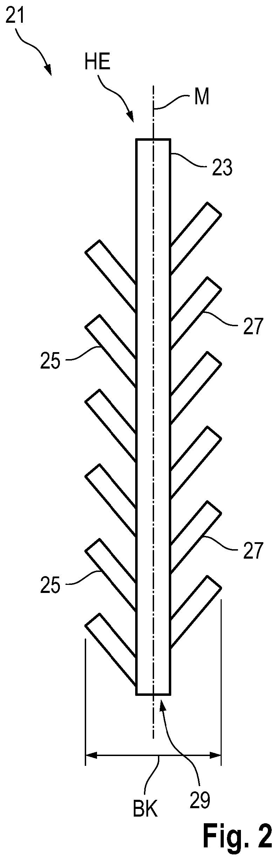

Ferner weist die Batteriezellenanordnung 1 ein elektrisch leitendes Kontaktelement 21 auf. Das Kontaktelement 21 ist in der Figur 2 in Alleinstellung und in mechanisch unbelastetem Zustand gezeigt. Selbstverständlich kann das Kontaktelement 21 bei dieser oder einer anderen Ausführungsform geometrisch auch anders gestaltet sein. Das Kontaktelement 21 ist elektrisch leitend ausgeführt und weist einen Basisabschnitt 23 auf, der sich beispielhaft im Wesentlichen flächig erstreckt. Durch den Basisabschnitt 23 erstreckt sich eine Mittelebene M des Kontaktelementes 21. Der Basisabschnitt 23 und auch das Kontaktelement 21 in seiner Gesamtheit sind zu der Mittelebene M ebenensymmetrisch. Bei der Batteriezellenanordnung 1, das heißt im montierten Zustand des Kontaktelementes 21, fällt die Mittelebene M mit der Symmetrieebene E zusammen. Das Material des Kontaktelementes 21 kann eine Aluminium und/oder eine Kupferlegierung aufweisen.

Das Kontaktelement 21 weist mehrere, erste Kontaktabschnitte 25 sowie mehrere, zweite Kontaktabschnitte 27 auf. Jeder der Kontaktabschnitte 25 und 27 weist, hier als eines von mehreren Beispielen, die Form einer Lamelle auf. Die ersten Kontaktabschnitt 25 und die zweiten Kontaktabschnitte 27 ragen auf unterschiedlichen Seiten, konkret auf unterschiedlichen Seiten der Mittelebene M, von dem Basisabschnitt 23 ab. Die Kontaktabschnitte 25 und 27 können jeweils einstückig und materialeinheitlich mit dem Basisabschnitt 23 verbunden sein. Jeder erste Kontaktabschnitt 25 und jeder zweite Kontaktabschnitt 27 schließt zusammen mit dem Basisabschnitt 23 jeweils einen Winkel mit einem Winkelwert von etwa 45° ein, der in Richtung einer Kontaktelementspitze 29 spitz zuläuft und in Richtung eines hinteren Endes HE des Kontaktelementes 21 offen ist. Der Winkelwert der Winkel kann selbstverständlich je nach Anwendungssituation des Kontaktelementes 21 auch anders gewählt werden.

Die Kontaktabschnitte 25 und 27 sind, bevorzugt im Vergleich zu dem Basisabschnitt 23, biegeweich gestaltet und/oder weisen eine geringe Biegesteifigkeit auf. Konkret bedeutet das, dass die Kontaktabschnitte 25 und 27 derart gestaltet sind, dass diese elastisch hin zu dem Basisabschnitt 23 biegbar sind, und zwar bevorzugt im Wesentlichen ohne dass ein Drehmoment in den Basisabschnitt 23 eingeleitet wird. Beim elastischen Biegen der Kontaktabschnitte 25 und 27 hin zu dem Basisabschnitt 23 verringert sich der Winkelwert des in Richtung des hinteren Endes HE des Kontaktelementes 21 offenen Winkels unter Aufbau einer Vorspannkraft in dem Kontaktelement 21.

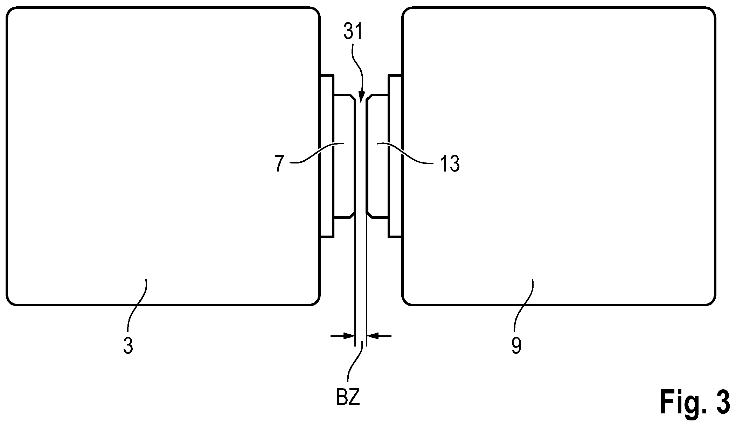

Wie dies in der Figur 1 dargestellt ist, liegen sich der erste Zellpol 7 und der zweite Zellpol 13 bei der Batteriezellenanordnung 1 gegenüber und sind um einen, in der Figur 3 gut ersichtlichen, Zwischenspalt 31 voneinander beabstandet. In dem Zwischenspalt 31 ist zur elektrischen Kontaktierung der ersten Batteriezelle, konkret des ersten Zellpols 7, mit der zweiten Batteriezelle, konkret des zweiten Zellpols 13, das Kontaktelement 21 angeordnet. Über das Kontaktelement 21 ist der erste Zellpol 7 elektrisch leitend mit dem zweiten Zellpol 13 verbunden. Die Batteriezellenanordnung 1 kann als Teil einer Batterie in einem Gehäuseinnenraum der Batterie, der von einem Batteriegehäuse der Batterie nach außen begrenzt ist, angeordnet sein. Das Batteriegehäuse kann dazu ausgebildet sein und/oder dazu geeignet sein, dass die erste Batteriezelle und die zweite Batteriezelle in dem Gehäuseinnenraum jeweils in einer vordefinierten Lage und einer vordefinierten Position zueinander an dem Batteriegehäuse gehalten sind.

Der Zwischenspalt 31 weist eine Breite BZ mit einem Breitenwert auf und das Kontaktelement 21 weist, im mechanisch unbelastetem Zustand, eine Breite BK mit einem Breitenwert auf. Der Breitenwert der Breite BZ ist geringer als der Breitenwert der Breite BK, so dass das in dem Zwischenspalt 31 angeordnete Kontaktelement 21 gegenüber seinem mechanisch unbelastetem Zustand elastisch verformt ist. Konkret sind die Kontaktabschnitte 25 und 27 hin zu dem Basisabschnitt 23 elastisch verformt. Durch die elastische Verformung ist in dem Kontaktelement 21 die Vorspannkraft aufgebaut, mittels derer die ersten Kontaktabschnitte 25 bei der Batteriezellenanordnung 1 gegen den ersten Zellpol 7 und die zweiten Kontaktabschnitte 27 gegen den zweiten Zellpol 13 gedrückt sind, so dass das Kontaktelement 21 zwischen dem ersten Zellpol 7 und dem zweiten Zellpol 13 geklemmt ist.

Die Batteriezellenanordnung 1 weist ferner eine Vergussmasse 41 auf. Das Material der Vergussmasse 41 ist aushärtend und/oder vernetzend. Bei der in der Figur 1 gezeigten Batteriezellenanordnung 1 ist ein Vergussraum, der sich zwischen der ersten Batteriezelle und der zweiten Batteriezelle erstreckt, vollständig mit der Vergussmasse 41 der Batteriezellenanordnung 1 gefüllt. Folglich ist auch der Zwischenspalt 31 mit der Vergussmasse 41 vollständig gefüllt, und zwar derart, dass das Kontaktelement 21 mit Ausnahme der Bereiche der Kontaktabschnitte 25 und 27, die mit einem der Zellpole 7 oder 13 unmittelbar in Anlagekontakt, bevorzugt Reibkontakt, stehen, vollständig von der Vergussmasse 41 umgeben ist. Die Vergussmasse 41 schützt die Batteriezellen und die Zellpole 7 und 13 im Bereich des Vergussraumes vor Korrosion. Außerdem wird das Kontaktelement 21 durch die umgebende Vergussmasse 41 mechanisch stabilisiert und in dem Zwischenspalt 31 fixiert.

Nachstehend sind zwei Verfahren, und zwar ein erstes Verfahren und ein zweites Verfahren, zur Herstellung der Batteriezellenanordnung beschrieben. Als Resultat beider Verfahren ist das Kontaktelement 21 zwischen den ersten Zellpol 7 und den zweiten Zellpol 13 geklemmt. Der Vergussraum wird bei beiden Verfahren vollständig mit der Vergussmasse 41 gefüllt und das Kontaktelement 21 somit umgossen.

Das erste Verfahren weist einen Bereitstellungsschritt, einen Anordnungsschritt, einen Kontaktierschritt, einen Prüfschritt und einen Vergussschritt auf. Bei dem Bereitstellungsschritt werden die erste Batteriezelle mit dem ersten Zellpol 7 und die zweite Batteriezelle mit dem zweiten Zellpol 13 sowie das Kontaktelement 21 und rein optional das Batteriegehäuse der Batterie bereitgestellt.

Zeitlich anschließend an den Bereitstellungsschritt wird bei dem ersten Verfahren der Anordnungsschritt durchgeführt. Bei dem Anordnungsschritt werden die erste Batteriezelle und die zweite Batteriezelle, bevorzugt an dem Batteriegehäuse, derart in vordefinierter Lage und/oder vordefinierter Position zueinander angeordnet, dass der erste Zellpol 7 dem zweiten Zellpol 13 gegenüberliegt und sich zwischen dem ersten Zellpol 7 und dem zweiten Zellpol 13 der Zwischenspalt 31 erstreckt. Nach Abschluss des Anordnungsschrittes sind die erste Batteriezelle und die zweite Batteriezelle so zueinander angeordnet, wie dies in der Figur 2 dargestellt ist.

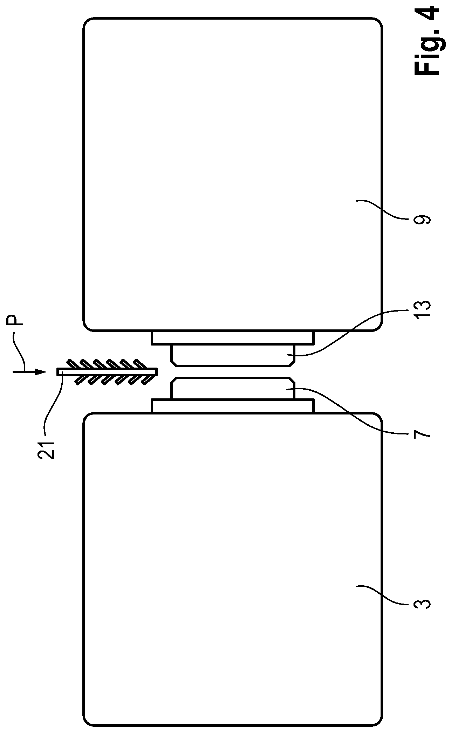

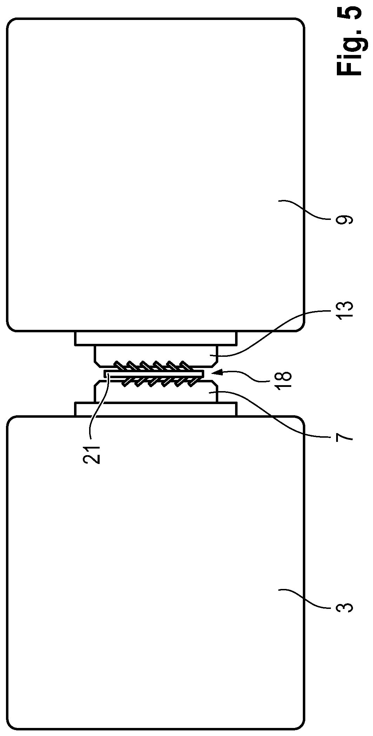

Zeitlich anschließend an den Anordnungsschritt wird bei dem ersten Verfahren der Kontaktierschritt durchgeführt. Bei dem Kontaktierschritt wird, wie dies in der Figur 4 anhand eines Pfeiles P angedeutet ist, das Kontaktelement 21 unter elastischer Verformung und mit der Kontaktelementspitze 29 voraus in den Zwischenspalt 31 eingeschoben, so dass sich das Kontaktelement 21 unter Aufbau der Vorspannkraft elastisch verformt und unter Wirkung der Vorspannkraft zwischen den ersten Zellpol 7 und den zweiten Zellpol 13 geklemmt ist. Nach Abschluss des Kontaktierschrittes ist das Kontaktelement in dem Zwischenspalt 31 angeordnet, wie dies in der Figur 5 dargestellt ist. Durch die elastische Verformung und/oder elastische Verformbarkeit des Kontaktelementes 21 ermöglicht das Kontaktelement 21 auch einen Lage- und/oder Positionstoleranzausgleich zwischen dem ersten Zellpol 7 und dem zweiten Zellpol 13.

Zeitlich anschließend an den Kontaktierschritt wird bei dem ersten Verfahren der Prüfschritt durchgeführt. Bei dem Prüfschritt wird überprüft, ob zwischen dem erstem Zellpol 7 und dem zweiten Zellpol 13 über das Kontaktelement 21 eine elektrische leitende Verbindung mit geringem elektrischem Widerstand hergestellt ist. Ist dies der Fall, so kann das erste Verfahren weitergeführt werden. Sollte hingegen keine elektrisch leitende Verbindung bestehen oder die elektrisch leitende einen elektrischen Widerstand über einem vordefiniertem Grenzwert aufweisen, so kann eine Nacharbeit durchgeführt werden und beispielsweise das Kontaktelement 21 zerstörungsfrei durch ein anderes Kontaktelement ersetzt werden oder das Kontaktelement 21 erneut in den Zwischenspalt 21 eingeschoben werden.

Unter der Annahme, dass der Prüfschritt bei dem ersten Verfahren mit positivem Ergebnis durchgeführt wurde, wird bei dem ersten Verfahren zeitlich anschließend an den Prüfschritt der Vergussschritt durchgeführt. Bei dem Vergussschritt wird die, bevorzugt elektrisch isolierende, Vergussmasse 41 in den Zwischenspalt 31 und in den Vergussraum zwischen der ersten Batteriezelle und der zweiten Batteriezelle gefüllt. Die Vergussmasse 41 wird derart in den Vergussraum und den Zwischenspalt 31 gefüllt, dass, mit Ausnahme des Kontaktelementes 21 der Vergussraum und der Zwischenspalt 31 vollständig mit der Vergussmasse 41 gefüllt werden. Nach Abschluss des Vergussschrittes ist, wie dies in der Figur 1 gezeigt ist, das Kontaktelement 21, mit Ausnahme der Bereiche des Kontaktelementes 21, die unmittelbar in Anlagekontakt mit dem ersten Zellpol 7 oder dem zweiten Zellpol 13 stehen, vollständig in die Vergussmasse 41 eingebettet. Am Ende des Vergussschrittes oder zeitlich anschließend an den Vergussschritt härtet die Vergussmasse 41 aus.

Das zweite Verfahren weist den Bereitstellungsschritt, einen Pressschritt, den Prüfschritt und den Vergussschritt auf. Bei dem Bereitstellungsschritt werden, wie auch schon beim ersten Verfahren, die erste Batteriezelle mit dem ersten Zellpol 7 und die zweite Batteriezelle mit dem zweiten Zellpol 13 sowie das Kontaktelement 21 und rein optional das Batteriegehäuse der Batterie bereitgestellt.

Zeitlich anschließend an den Bereitstellungsschritt wird bei dem zweiten Verfahren der Fixierschritt durchgeführt. Bei dem Fixierschritt wird die erste Batteriezelle in vordefinierter Lage und/oder vordefinierter Position, bevorzugt an dem Batteriegehäuse, fixiert.

Zeitlich anschließend an den Fixierschritt wird bei dem zweiten Verfahren der Pressschritt durchgeführt. Bei dem Pressschritt wird der zweite Zellpol 13 unter Zwischenordnung des Kontaktelementes 21 und elastischer Verformung des Kotaktelementes 21 gegen den ersten Zellpol 7 gepresst und zeitlich anschließend die zweite Batteriezelle relativ zu der ersten Batteriezelle in vordefinierter Lage und/oder vordefinierter Position fixiert, so dass das Kontaktelement 21 zwischen den ersten Zellpol 7 und den zweiten Zellpol 13 geklemmt ist. Durch die elastische Verformung und/oder elastische Verformbarkeit des Kontaktelementes 21 ermöglicht das Kontaktelement 21 auch einen Lage- und/oder Positionstoleranzausgleich zwischen dem ersten Zellpol 7 und dem zweiten Zellpol 13.

Zeitlich anschließend an den Pressschritt wird bei dem zweiten Verfahren der Prüfschritt durchgeführt. Bei dem Prüfschritt wird überprüft, ob zwischen dem erstem Zellpol 7 und dem zweiten Zellpol 13 über das Kontaktelement 21 eine elektrische leitende Verbindung mit geringem elektrischem Widerstand hergestellt ist. Ist dies der Fall, so kann das zweite Verfahren weitergeführt werden. Sollte hingegen keine elektrisch leitende Verbindung bestehen oder die elektrisch leitende einen elektrischen Widerstand über einem vordefiniertem Grenzwert aufweisen, so kann eine Nacharbeit durchgeführt werden und beispielsweise das Kontaktelement 21 zerstörungsfrei durch ein anderes Kontaktelement ersetzt werden oder das Kontaktelement 21 erneut in den Zwischenspalt 21 eingeschoben werden.

Unter der Annahme, dass der Prüfschritt bei dem zweiten Verfahren mit positivem Ergebnis durchgeführt wurde, wird bei dem zweiten Verfahren zeitlich anschließend an den Prüfschritt der Vergussschritt durchgeführt. Bei dem Vergussschritt wird die, bevorzugt elektrisch isolierende, Vergussmasse 41 in den Zwischenspalt 31 und in den Vergussraum zwischen der ersten Batteriezelle und der zweiten Batteriezelle gefüllt. Die Vergussmasse 41 wird derart in den Vergussraum und den Zwischenspalt 31 gefüllt, dass, mit Ausnahme des Kontaktelementes 21 der Vergussraum und der Zwischenspalt 31 vollständig mit der Vergussmasse 41 gefüllt werden. Das Kontaktelement 21 ist, mit Ausnahme der Bereiche des Kontaktelementes 21, die unmittelbar in Anlagekontakt mit dem ersten Zellpol 7 oder dem zweiten Zellpol 13 stehen, vollständig in die Vergussmasse 41 eingebettet. Am Ende des Vergussschrittes härtet die Vergussmasse 41 aus.

Sowohl bei dem ersten Verfahren als auch bei dem zweiten Verfahren kann das Kontaktelement 21 dazu ausgebildet sein und dazu geeignet sein und es kann sich durch die elastische Verformung des Kontaktelementes 21 eine derart hohe Vorspannkraft in dem Kontaktelement 21 aufbauen, dass das Kontaktelement 21 beim dem Kontaktierschritt oder beim dem Pressschritt eine Aluminiumoxidschicht des ersten Zellpols 7 und des zweiten Zellpols 13 zumindest teilweise abreibt oder abkratzt, so dass das Kontaktelement 21 in unmittelbarem Anlagekontakt mit einem Grundmaterial des ersten Zellpols 7 und des zweiten Zellpols 13 steht.

Ergänzend wird noch darauf hingewiesen, dass in den Figuren 1 und 5 das Kontaktelement 21 zur besseren Erkennbarkeit in seinem mechanisch unbelastetem Zustand gezeigt ist, obwohl das Kontaktelement 21 in den Figuren 1 und 5 bereits unter Aufbau der Vorspannkraft ist, so dass die die Kontaktelemente 25 und 27 an den Zellpolen 7 und 13 unter Einwirkung der Vorspannkraft anliegen.

### Bezugszeichenliste

- 1: Batteriezellenanordnung
- 3: erstes Zellgehäuse
- 5: erstes Isolationselement
- 7: erster Zellpol
- 9: zweites Zellgehäuse
- 11: zweites Isolationselement
- 13: zweiter Zellpol
- 21: Kontaktelement
- 23: Basisabschnitt
- 25: erster Kontaktabschnitt
- 27: zweiter Kontaktabschnitt
- 29: Kontaktelementspitze
- 31: Zwischenspalt
- 41: Vergussmasse

- BK: Breite
- BZ: Breite
- E: Symmetrieebene
- HE: hinteres Ende
- M: Mittelebene
- P: Pfeil

## Patentansprüche

1. Batteriezellenanordnung mit:
einer ersten Batteriezelle mit einem ersten Zellpol (7),
einer zweiten Batteriezelle mit einem zweiten Zellpol (13), und
einem Kontaktelement (21) zur elektrischen Kontaktierung der ersten Batteriezelle mit der zweiten Batteriezelle,
wobei der erste Zellpol (7) über das Kontaktelement (21) mit dem zweiten Zellpol (13) elektrisch kontaktiert ist,
**dadurch gekennzeichnet,**
**dass** das Kontaktelement (21) zwischen den ersten Zellpol (7) und den zweiten Zellpol (13) geklemmt ist,
wobei bevorzugt vorgesehen ist, dass die erste Batteriezelle und die zweite Batteriezelle derart zueinander angeordnet sind, dass der erste Zellpol (7) dem zweiten Zellpol (13) gegenüberliegt, und
wobei besonders bevorzugt vorgesehen ist, dass der erste Zellpol (7) und der zweite Zellpol (13) um einen Zwischenspalt (31) voneinander beabstandet sind, und dass das Kontaktelement (21) in dem Zwischenspalt (31) angeordnet ist, und dass der Zwischenspalt (31) mit einer, bevorzugt elektrisch isolierenden, Vergussmasse (41) gefüllt ist.

2. Batteriezellenanordnung nach Anspruch 1, **dadurch gekennzeichnet,**
**dass** das Kontaktelement (21) einen Basisabschnitt (23) und einen ersten Kontaktabschnitt (25) oder mehrere erste Kontaktabschnitte (25) und/oder einen zweiten Kontaktabschnitt (27) oder mehrere zweite Kontaktabschnitte (27) aufweist, und dass zumindest einer der ersten Kontaktabschnitte (25) oder einer der zweiten Kontaktabschnitte (27) gegenüber dem Basisabschnitt (23) unter Aufbau einer Vorspannkraft elastisch verformt ist.

3. Batteriezellenanordnung nach Anspruch 2, **dadurch gekennzeichnet,**
**dass** einer, mehrere oder alle ersten Kontaktabschnitte (25) und/oder einer, mehrere oder alle zweiten Kontaktabschnitte (27) mit dem Basisabschnitt (23) jeweils einen in Richtung einer Kontaktelementspitze (29) des Kontaktelementes (21) spitzen und in Richtung eines hinteren Endes (HE) des Kontaktelementes (21) offenen Winkel einschließen, wobei bevorzugt vorgesehen ist, dass der Winkelwert des Winkels in einem Bereich von 10° bis 80°, bevorzugt in einem Bereich von 30° bis 60°, besonders bevorzugt in einem Bereich von 40° bis 50°, liegt.

4. Batteriezellenanordnung nach einem der vorhergehenden Ansprüche, **dadurch gekennzeichnet,**
**dass** die erste Batteriezelle durch eine prismatische Batteriezelle gebildet ist, und/oder dass die zweite Batteriezelle durch eine prismatische Batteriezelle gebildet ist

5. Batteriezellenanordnung nach einem der vorhergehenden Ansprüche, **dadurch gekennzeichnet,**
**dass** das Kontaktelement (21) zu einer Mittelebene (M) ebensymmetrisch ist, wobei bevorzugt vorgesehen ist, dass sich ein Basisabschnitt (23) des Kontaktelementes (21) im Wesentlichen flächig in der Mittelebene (M) erstreckt.

6. Verfahren zur Herstellung einer Batteriezellenanordnung nach einem der vorhergehenden Ansprüche mit:
einem Bereitstellungsschritt, bei dem die erste Batteriezelle mit dem ersten Zellpol (7) und die zweite Batteriezelle mit dem zweiten Zellpol (13) sowie das Kontaktelement (21) bereitgestellt werden,
**dadurch gekennzeichnet,**
**dass** das Verfahren einen Anordnungsschritt aufweist, bei dem die erste Batteriezelle und die zweite Batteriezelle derart in vordefinierter Lage und/oder vordefinierter Position zueinander angeordnet werden, dass der erste Zellpol (7) dem zweiten Zellpol (13) gegenüberliegt und sich zwischen dem ersten Zellpol (7) und dem zweiten Zellpol (13) ein Zwischenspalt (31) erstreckt, und
**dass** das Verfahren einen Kontaktierschritt aufweist, bei dem das Kontaktelement (21) unter elastischer Verformung in den Zwischenspalt (31) eingeschoben wird, so dass das Kontaktelement (21) zwischen den ersten Zellpol (7) und den zweiten Zellpol (13) geklemmt ist.

7. Verfahren zur Herstellung einer Batteriezellenanordnung nach einem der Ansprüche 1 bis 5 mit:
einem Bereitstellungsschritt, bei dem die erste Batteriezelle mit dem ersten Zellpol (7) und die zweite Batteriezelle mit dem zweiten Zellpol (13) sowie das Kontaktelement (21) bereitgestellt werden,
**dadurch gekennzeichnet,**
**dass** das Verfahren einen Fixierschritt aufweist, bei dem die erste Batteriezelle in vordefinierter Lage und/oder vordefinierter Position fixiert wird, und
**dass** das Verfahren einen Pressschritt aufweist, bei dem der zweite Zellpol (13) unter Zwischenordnung des Kontaktelementes (21) und elastischer Verformung des Kotaktelementes (21) gegen den ersten Zellpol (7) gepresst und zeitlich anschließend die zweite Batteriezelle relativ zu der ersten Batteriezelle fixiert wird, so dass das Kontaktelement (21) zwischen den ersten Zellpol (7) und den zweiten Zellpol (13) geklemmt ist.

8. Verfahren nach Anspruch 6 oder 7, **dadurch gekennzeichnet,**
**dass** das Kontaktelement (21) dazu ausgebildet ist und/oder dazu geeignet ist und/oder dass sich durch die elastische Verformung des Kontaktelementes (21) eine derart hohe Vorspannkraft in dem Kontaktelement (21) aufbaut, dass das Kontaktelement (21) beim Kontaktierschritt oder beim Pressschritt, bevorzugt bei Zellpolen (7; 13), die Aluminium oder eine Aluminiumlegierung aufweisen, eine Oxidschicht, bevorzugt eine Alumiumoxidschicht, des ersten Zellpols (7) und/oder des zweiten Zellpols (13) abreibt oder abkratzt.

9. Verfahren nach einem der Ansprüche 6 bis 8, **dadurch gekennzeichnet,**
**dass** das Verfahren einen Vergussschritt aufweist, bei dem eine, bevorzugt elektrisch isolierende, Vergussmasse in den Zwischenspalt (31) und/oder in einen Vergussraum zwischen der ersten Batteriezelle und der zweiten Batteriezelle gefüllt wird.

10. Batterie mit einer Batteriezellenanordnung (1) nach einem der Ansprüche 1 bis 5 oder mit einer Batteriezellenanordnung (1), die mit einem Verfahren nach einem der Ansprüche 6 bis 9 hergestellt ist.
